# EUROPÄISCHE PATENTSCHRIFT

(11) **EP 3 072 688 B1**
(45) Veröffentlichungstag und Bekanntmachung des Hinweises auf die Patenterteilung: **14.03.2018**
(21) Anmeldenummer: 16162418.4
(22) Anmeldetag: 24.03.2016
(51) Int. Cl.: B32B 37/10, B32B 41/00, B30B 11/00

(54) **VERFAHREN UND VORRICHTUNG ZUM LAMINIEREN EINES MEHRSCHICHTEN- SICHERHEITS-DOKUMENTKÖRPERS MIT DEFORMATIONSÜBERWACHUNG**
METHOD AND DEVICE FOR LAMINATING A MULTILAYER SECURITY DOCUMENT WITH DEFORMATION MONITORING
PROCEDE ET DISPOSITIF DESTINE A LAMINER UN DOCUMENT DE SECURITE MULTICOUCHES COMPRENANT UNE SURVEILLANCE DE DEFORMATION

(30) Priorität: 26.03.2015 DE 102015205539
(43) Veröffentlichungstag der Anmeldung: 28.09.2016
(73) Patentinhaber: Bundesdruckerei GmbH, 10969 Berlin (DE)
(72) Erfinder: Ferber, Alexander, 12105 Berlin (DE)
(74) Vertreter: Patentanwälte Bressel und Partner mbB

(56) Entgegenhaltungen:
- EP-A2- 1 439 055
- DE-A1- 19 846 210
- DE-A1-102012 207 174

## Beschreibung

Die Erfindung betrifft ein Verfahren und eine Vorrichtung zum Laminieren eines aus mehreren Schichten hergestellten Sicherheits-Dokumentenkörpers.

Moderne Sicherheitsdokumente oder Wertdokumente bestehen in der Regel aus einem Sicherheits-Dokumentenkörper, der aus mehreren einzelnen Schichten hergestellt ist, welche in einem der Prozessschritte laminiert, also miteinander verbunden werden. Ein typischer Sicherheits-Dokumentenkörper ist ein ID1-Dokument, das aus beispielsweise drei bis 15 Substratschichten besteht und in einem Prozesstakt, der nach technischer Ausführung der Lamination und den Produktanforderungen im Sekunden- bis zum Stundenbereich liegen kann, laminiert wird, wobei die Dicke nach dem Laminieren etwa 680-840 µm, beispielsweise 760 µm, beträgt. Die einzelnen Schichten selber können dabei verschiedene personalisierte Informationen und/oder Sicherheitsmerkmale tragen, welche dafür sorgen, dass das Sicherheitsdokument schwer zu fälschen oder nachzuahmen ist. Solche Sicherheitsmerkmale können beispielsweise gedruckte Symbole oder Darstellungen, Hologramme oder Durchlichtpasser sein. Die Fortschritte der letzten Jahre auf dem Gebiet der Elektronik ermöglichen es mittlerweile zunehmend, elektronische Bauelemente, sogenannte Inlays, in diese Schichten einzubringen. Beispielsweise können durch Bedrucken mit einer elektrisch leitenden Schicht Antennenstrukturen, welche mit einem gesondert eingebrachten Radio-Frequency Identification(RFID)-Chip verbunden werden, in einem einfachen und günstigen Verfahren hergestellt werden. Da diese elektronischen Strukturen besonders empfindlich gegenüber mechanischer Beanspruchung sind, ist es notwendig, den Prozessschritt des Laminierens genau zu kontrollieren, da es sonst zu Beschädigungen der gedruckten elektronischen Struktur oder anderer Sicherheitsmerkmale und damit zu Ausschuss kommen kann.

Aus dem Stand der Technik sind Vorrichtungen und Verfahren zum Laminieren mehrerer Schichten bekannt, z.B. aus DE-A-10 2012 207 174. Ein Stapel aus mehreren Substratschichten, welche beispielsweise aus Polycarbonat (PC) bestehen, wird dabei zwischen die Stempel einer thermischen Presse positioniert. Angrenzend an Grenzflächen des Substratschichtenstapels sind Laminationsbleche angeordnet. Um eine gleichmäßige Kraftverteilung und einen optimalen thermischen Kontakt zu erhalten, sind zwischen den Laminationsblechen und den Stempeln Presspolter angeordnet, die häufig über die Stempel gestülpt sind. Die Substratschichten werden durch Erhöhen des Anpressdrucks auf die Oberseite und/oder die Unterseite des Stapels miteinander zusammengefügt. Dabei kommt es durch die beheizten Stempel neben der Erhöhung des Drucks zu einer Temperaturerhöhung innerhalb des Stapels. Das Material der Schichten fängt dadurch an zu fließen und die einzelnen Substratschichten verbinden sich miteinander, so dass ein Laminat entsteht.

Ein Nachteil der vorgenannten Vorrichtungen und Verfahren ist, dass die Bedingungen innerhalb des Laminats nicht erfasst und geregelt werden können. Die Stellgrößen des Prozesses, hier beispielsweise der Anpressdruck, die Temperatur und die Zeitdauer, werden vorher mit Hilfe von empirischen Vorversuchen bestimmt und dann entsprechend eingestellt. Durch Parameterdrift und unbekannte Prozessbedingungen, wie beispielsweise bei jedem einzelnen Laminationsvorgang auftretende unterschiedlich ausgebildete eingeschlossene Luftpolster zwischen den Laminationsblechen und den Presspolstern und/oder zwischen den Laminationsblechen und den Oberflächen des Substratschichtenstapels und/oder den Substratschichten, Variationen und Alterungen der Materialien von Blechen und Presspolstern, unterschiedlich dicke Laminationsfolien, unterschiedliche Rauigkeiten etc., kann ein wiederholtes Anpassen der Prozessparameter notwendig sein. Ebenfalls unbekannt sind die genauen Temperaturgradienten, und damit auch die Kerntemperatur im Substratschichtenstapel, welche während des Laminationsprozesses nicht bestimmt werden kann. Eine Prozesskontrolle über eine Kontrolle der Kerntemperatur im Substratschichtenstapel ist also nicht möglich. Die Folge ist, dass erst nach Durchlaufen des Laminationsprozesses über eine Inspektion des fertig laminierten Sicherheits-Dokumentenkörpers festgestellt werden kann, ob die eingestellten Parameter sinnvoll waren oder sich vielleicht im Laufe des Prozesses oder mehrerer Prozesszyklen verändert haben, beispielsweise, weil es zu einer Abnutzung, Veränderung oder einem Wechsel der Laminationsbleche gekommen ist. Dies führt zu einem erhöhten Ausschuss und/oder einer verringerten Lebensdauer der Sicherheit-Dokumentenkörper auf Grund nicht optimal laminierter Substratschichten. Diesen Unsicherheiten wird im Stand der Technik mit einer entsprechend höheren Sicherheitsmarge bei den Prozessparametern begegnet, was wiederum zu einer Vorschädigung der einzulaminierenden Elektronik führen kann.

Es ist somit wünschenswert, eine Laminationsvorrichtung zur Verfügung zu haben, bei der eine fortlaufende Kontrolle des Laminationsprozesses möglich ist und sich der Ausschuss dadurch reduzieren lässt.

Der Erfindung liegt somit das Problem zugrunde, ein Verfahren und eine Vorrichtung zum Laminieren von Substratschichten zu schaffen, welche eine zuverlässige und reproduzierbare Lamination bei minimaler Verspannung der Elektronik gewährleisten.

Die technische Aufgabe wird erfindungsgemäß durch eine Vorrichtung mit den Merkmalen des Patentanspruchs 1 und ein Verfahren mit den Merkmalen des Patentanspruchs 12 gelöst. Vorteilhafte Ausgestaltungen der Erfindung ergeben sich aus den Unteransprüchen.

Der Erfindung liegt der Gedanke zugrunde, während des Laminationsprozesses mindestens einen Abstand mindestens einen beweglichen Stempels relativ zu einem weiteren komplementären Stempel zu bestimmen. Vorzugsweise wird wiederholt der Abstand des beweglichen Stempels zu einer ortfesten Fixposition gemessen, wobei die Richtung der Stempelbewegung die Achse bestimmt, entlang derer der Abstand gemessen wird. Aus der bestimmten Position des beweglichen Stempels lässt sich der Abstand relativ zum weiteren komplementären Stempel bestimmen und das Ergebnis gibt Aufschluss darüber, wie groß die aktuelle Dicke des Substratschichtenstapels ist bzw. wie stark der Substratschichtenstapel bereits verformt wurde. Dadurch wird es möglich, den Zustand des Substratschichtenstapels fortlaufend zu kontrollieren. Beispielsweise kann der Laminationsprozess bei Erreichen eines vorgegebenen Bereichs oder vorgegebenen Sollwerts für den Abstand oder bei Erreichen einer vorgegebenen ermittelten Abstandsänderung während der Lamination unterbrochen, verändert oder beendet werden. Als Folge der wiederholten Prozesskontrolle kann die Qualität der fertig laminierten Sicherheits-Dokumentenkörper erhöht und der Ausschuss verringert werden. Es wird somit sichergestellt, dass beispielsweise unterschiedliche Sicherheits-Dokumentenkörper gleichen Typs nach Durchlaufen des Laminationsprozesses alle im gleichen Zustand ausgeliefert werden. Darüber hinaus können durch falsche Prozessparameter verursachte Beschädigungen an elektronischen Bauelementen auf diese Weise verhindert werden.

### Definitionen

Ein Sicherheits-Dokumentenkörper ist ein Dokumentenkörper mit mindestens einem Sicherheitsmerkmal. Ein mehrschichtiger Sicherheits-Dokumentenkörper ein Sicherheitsdokumentkörper, der aus mindestens zwei Substratschichten hergestellt ist. Der mehrschichtige Sicherheitsdokumentkörper selbst ist ein Körper, vorzugsweis ein homogener Körper, der nicht in die Substratschichten aufgespalten werden kann, aus denen er hergestellt ist.

Ein Sicherheitsmerkmal ist ein Merkmal, das eine Fälschung oder eine Nachahmen des Dokumentenkörpers erschwert oder unmöglich macht.

Eine Substratschicht ist eine einzelne körperliche Schicht, die zum Ausbilden eines Sicherheitsdokumentkörpers verwendet werden kann. Diese kann unterschiedliche Funktionen für den Sicherheits-Dokumentenkörper übernehmen. Beispielsweise kann eine solche Funktion die mechanische Verstärkung des Dokumentenkörpers oder das Tragen von Information sein. Eine Substratschicht kann insbesondere auch elektronische Bauelemente enthalten.

Ein Substratschichtenstapel ist ein Stapel aus mehreren übereinander angeordneten Substratschichten. Er wird in einem Laminationsprozess zu einem Laminat umgewandelt.

Eine thermische Presse ist eine Vorrichtung bei der durch Anwendung von Druck mindesten ein Material komprimiert oder verpresst werden kann, wobei mindestens ein Stempel geheizten oder gekühlt ist oder heiz- und/oder kühlbar ist. In der Regel wird eine thermische Presse verwendet, um während des Pressvorgangs Energie in Form von Wärme in ein Pressgut, beispielsweise Substratschichten eines Substratschichtenstapels, einzubringen, somit die Temperatur in dem Pressgut zu erhöhen und hierüber eine Verformbarkeit zu steigern und für den Pressvorgang auszunutzen. In einer Kühlpresse kann eine unter Druckeinwirkung im erwärmten Zustand des Pressguts erreichte Verformung beim Abkühlen "eingefroren" werden. Ebenso können insbesondere bei thermoplastischen Kunststoffen unterschiedliche Schichten bei einer Erwärmung über die Glastemperatur des entsprechenden Materials oder der entsprechenden Materialien miteinander verschmolzen oder verschweißt werden, wobei ein Anpressdruck den Vorgang deutlich begünstigt oder erst ermöglicht.

### Bevorzugte Ausführungsformen

Insbesondere wird somit eine Vorrichtung zum Laminieren eines aus mehreren Substratschichten bestehenden Stapels zu einem Sicherheits-Dokumentenkörper geschaffen, welche mindestens eine thermische Presse mit mindestens einem beweglichen Stempel zum Laminieren des aus mehreren Substratschichten bestehenden Stapels und eine Steuereinrichtung zum Steuern eines Anpressdrucks der thermischen Presse umfasst, wobei die Vorrichtung mindestens einen Abstandssensor zum Messen mindestens eines Abstands des mindestens einen beweglichen Stempels relativ zu einem weiteren Stempel umfasst, wobei der mindestens eine Abstandssensor ein dem Abstand entsprechendes Signal erzeugt.

Ferner wird vorteilhafterweise ein Verfahren zum Laminieren eines mehrschichtigen Sicherheits-Dokumentenkörpers geschaffen, die folgenden Schritte umfasst: Einbringen eines Substratschichtenstapels aus mehreren Substratschichten in eine thermische Presse mit mindestens einem beweglichen Stempel, Laminieren der Substratschichten zu einem Sicherheits-Dokumentenkörper durch einen Pressvorgang, wobei während des Pressvorgangs mindestens ein Abstand des mindestens einen beweglichen Stempels relativ zu einem weiteren Stempel bestimmt und als entsprechendes Signal ausgegeben wird.

Der Vorteil der Erfindung liegt darin, dass der Laminationsprozess fortlaufend überwacht werden kann. Besitzt die thermische Presse beispielsweise einen einzigen beweglichen Stempel, der gegen einen ortfesten Stempel bewegt, d.h. gepresst, werden kann, so reicht eine Kenntnis der Stempelposition des einen beweglichen Stempels in einem Bezugssystem mit dem anderen Stempel verknüpften, d.h. ortsfesten, Bezugssystem aus, um fortlaufend die Dicke des Substratschichtenstapels zu bestimmen. So kann der Laminationsprozess anhand des absoluten Wertes für die Dicke des Substratschichtenstapels oder bereits entstandenen Laminats fortlaufend und wiederholt überwacht werden. Ebenso kann eine Abstandsänderung der Stempel oder eine Dickenänderung des Substratschichtenstapels oder Laminats abgeleitet und überwacht werden. Da der Zustand des Substratschichtenstapels stets bekannt ist, kann der Endzustand des fertig laminierten Sicherheits-Dokumentenkörpers gezielt angefahren werden und für verschiedene Sicherheits-Dokumentenkörper desselben Typs angeglichen werden.

Denkbar ist auch, dass eine differentielle Dickenänderung über die Zeit bestimmt wird und als Parameter zur Überwachung herangezogen wird. Beispielsweise können während des Laminationsprozesses so Zeitpunkte oder Zeiträume identifiziert werden, in denen die einzelnen Substratschichten auf Grund von bestimmten Kombinationen aus Druck und Temperatur ihr Fließverhalten ändern oder sogar einen Phasenübergang durchlaufen. Der Laminationsprozess wird dadurch unabhängiger von starr vorgegebenen Prozessabläufen mit vorher empirisch bestimmten Prozessparametern.

Darüber hinaus lassen sich Parameterbereiche für Druck und Temperatur, welche empfindliche Schichten, beispielsweise solche mit aufgedruckten elektronischen Bauelementen, beschädigen könnten, identifizieren und in den folgenden Durchläufen des Laminationsprozesses vermeiden. Insgesamt steigt somit die Qualität des fertig laminierten Sicherheits-Dokumentenkörpers und der Ausschuss und die Kosten werden reduziert.

Eine besonders vorteilhafte Ausführungsform sieht vor, dass die Steuereinrichtung ausgebildet ist, das Signal vom Abstandssensor als Eingangsparameter zum Regeln des Anpressdrucks des mindestens einen beweglichen Stempels der thermischen Presse zu verwenden. Dies bietet den Vorteil, dass ein Regeln des Anpressdrucks in Abhängigkeit der Stempelposition bzw. der Dicke oder Dickenänderung des Substratschichtenstapels automatisch erfolgen kann. Ebenso denkbar ist, dass der Anpressdruck für verschiedene Zeitabschnitte des Laminationsprozesses oder verschiedene Dicken des Substratschichtenstapels unterschiedlich gewählt wird. Da sich die Temperatur auf Grund des Anpressdrucks verändern kann, kann somit beispielsweise ein zu schneller Temperaturanstieg im Substratschichtenstapel vermieden werden, indem der Anpressdruck nur langsam oder bis zum Erreichen eines Temperaturgleichgewichts zeitweise gar nicht verändert wird.

Besonders bevorzugt ist eine Ausführungsform der Vorrichtung, bei der der Abstandssensor mindestens einen Laser umfasst. Der Laser kann auf unkomplizierte und kostengünstige Weise verwendet werden, um den Abstand zwischen einem ortsfesten Punkt und dem mindestens einen beweglichen Stempel zu bestimmen. Die Abstandsbestimmung kann beispielsweise realisiert werden durch eine Laufzeitmessung eines am ortsfesten Punkt ausgesandten Laserpulses, der an dem beweglichen Stempel reflektiert wird und dessen Ankunft anschließend, beispielsweise von einer Fotodiode, an dem ortsfesten Punkt detektiert wird. Aus der gemessenen Laufzeit und der Lichtgeschwindigkeit lässt sich dann der Abstand des beweglichen Stempels von dem ortsfesten Punkt bestimmen. Ist der Abstand bekannt, so ist auch die Stempelposition bekannt, woraus sich der Abstand der beiden Stempel relativ zueinander und daraus die Dicke des Substratschichtenstapels berechnen lässt. Mit Hilfe eines Lasers lässt sich eine solche Abstandsbestimmung wiederholt in sehr kurzen Abständen realisieren, so dass eine zeitlich hoch aufgelöste Bestimmung der Stempelposition möglich ist.

Eine weitere besonders bevorzugte Ausführungsform der Erfindung sieht vor, dass die Bestimmung der Stempelposition mit Hilfe eines Lasers und interferometrischer Verfahren realisiert wird. Dazu wird der Abstandssensor so ausgebildet, dass ein von einem, vorzugsweise im Dauerstrich-Modus betriebenen, Laser ausgesandter kohärenter Laserstrahl nach der Reflexion an dem beweglichen Stempel mit sich selber interferiert. Der Laser selbst befindet sich dabei an einer ortsfesten Position. Wird der bewegliche Stempel während des Laminationsprozesses in Richtung des Anpressdrucks bewegt, so verändert sich die Lauflänge des Laserstrahls, so dass sich der ausgesandte und der reflektierte Laserstrahl bezüglich ihrer Phasenbeziehung anders überlagern. Ändert sich die Position des beweglichen Stempels, werden nacheinander in Abhängigkeit der Wellenlänge des Laserlichts einzelne Interferenzmaxima und -minima durchfahren. Da der Laserstrahl bei einmaliger Reflexion mit sich selber interferiert, wird immer nach einer Änderung der Stempelposition um die halbe Lichtwellenlänge das nächste Interferenzmaxima oder -minima erreicht, so dass die Auflösung der Positionsbestimmung bei der halben Lichtwellenlänge liegt. Bei einem Standard-HeNe-Laser ist die Wellenlänge des Lichts beispielsweise 633 nm, so dass die messbare Längenänderung bzw. Änderung Stempelposition dann etwa die Hälfte dieses Wertes ist, also 316,5 nm. Die Dicken von Sicherheits-Dokumentenkörpern liegen typischerweise bei mehreren Hundert Mikrometern, wobei sich die Dicke während des Laminationsprozesses bis etwa 15%, in der Regel um etwa 1 bis 10 %, verringert. Diese Dickenänderung ist folglich sehr gut mit Hilfe von Laserinterferometrie und gängigen Laserwellenlängen kostengünstiger Laser detektierbar.

Da bei der Laserinterferometrie eine relative Längenänderung bestimmbar wird, vorzugsweise vorher, eine Position als Referenzposition festgelegt, beispielsweise eine Ausgangsposition, bei der der bewegliche Stempel sich bereits geschlossen hat, das Laminieren aber noch nicht begonnen hat.

Die Auflösung lässt sich weiter erhöhen, wenn der Laserstrahl nicht nur ein einziges Mal, sondern mehrmals zwischen der ortsfesten Position und dem beweglichen Stempel hin-und her reflektiert wird. Die Auflösung der Abstandmessung bzw. Positionsbestimmung erhöht sich dann antiproportional zur zurückgelegten Weglänge des Laserstrahls. Der Vorteil dieser Methode liegt somit darin, dass die erreichbare Auflösung gezielt eingestellt werden kann. Dadurch sind schon kleinste Veränderungen im Abstand zwischen den beiden Stempeln bzw. der Dicke des Substratschichtenstapels messbar und können zur Überwachung und/oder Regelung des Laminationsprozesses herangezogen werden.

In weiteren Ausführungsformen werden andere Arten von Abstandssensoren zur Bestimmung der Stempelposition verwendet. Beispielsweise können dies eine an dem beweglichen Stempel angebrachte lineare Skala oder ein zeitgleich mit dem Substratschichtenstapel deformierter Piezokristall sein.

Eine Ausführungsform sieht vor, dass der Abstand gemessen wird, indem ein Laserstrahl auf eine quer, vorzugsweise senkrecht, zur Bewegungsrichtung stehende Oberfläche des beweglichen Stempels unter einem Winkel, vorzugsweise einem Winkel größer 25°, noch bevorzugter großer 30°, bezogen auf eine Oberflächennormale der Oberfläche gerichtet wird und ein von der Oberfläche zurückgestreuter oder reflektierter Strahl mittels eines CCD-Zeilendetektors detektiert wird. Vorzugsweise wird der in Richtung der Oberflächennormale der Oberfläche reflektierte oder zurückgestreute Strahl mit dem CCD-Zeilendetektor erfasst. Dieses ist eine einfache und robuste Art die Stempelposition präzise zu bestimmen.

In einer Ausführungsform umfasst die Vorrichtung mehrere Pressen, wobei jede der Pressen mindestens einen eigenen Abstandssensor umfasst. So kann auch ein mehrstufiger Laminationsprozess mit mehreren Pressen überwacht oder geregelt werden.

Idealerweise wird eine Ausführungsform realisiert, bei der die Steuereinrichtung so ausgebildet ist, den Pressvorgang zu beenden, wenn ein vorgegebener Bereich für die Stempelposition bzw. die Dicke des Substratschichtenstapels erreicht ist. Dadurch lässt sich eine Zieldicke kontrolliert erreichen und eine Elimination oder Überdeformation vermeiden.

Bei einer Ausführungsform umfasst die Vorrichtung mindestens eine Heiz- und/oder Kühlplatte. Dadurch kann der Substratschichtenstapel während des Laminationsprozesses gezielt geheizt und/oder gekühlt werden.

Bei einer weiteren Ausführungsform umfasst die Vorrichtung mindestens ein Presspolster. Dadurch wird ein flächig gleichmäßiger Druck auf die Ober- und/oder Unterseite des Substratschichtenstapels während des Laminationsprozesses erreicht.

Bei einer weiteren Ausführungsform ist vorgesehen, dass die Vorrichtung eine Kassette umfasst, welche mit mehreren übereinander angeordneten Substratschichtenstapeln bestückt ist. Die Substratschichtenstapel werden dann in einem einzigen Pressvorgang zeitgleich laminiert. Dabei wird ebenfalls die Position des mindestens einen beweglichen Stempels bestimmt, über welche dann die Summe der Dicken der einzelnen Substratschichtenstapel ermittelt werden kann. Der Vorteil ist ein wesentlich höherer Durchsatz an Sicherheits-Dokumentenkörpern.

In einer weiteren vorteilhaften Ausführungsform wird die Temperatur der Heiz- und/oder Kühlplatten der thermischen Presse erfasst. Dadurch ist eine Überwachung der Temperatur während des Laminationsprozesses möglich.

In einer besonders vorteilhaften Ausführungsform ist die Steuereinrichtung so ausgebildet, die Temperatur der Heiz- und/oder Kühlplatten zu regeln, wobei beim Regeln die Position des mindestens einen beweglichen Stempels einen Eingangsparameter bildet.

Besonders Vorteilhaft ist eine Ausführungsform, bei der die Steuereinrichtung eine Schnittstelle umfasst, an der die Position des mindestens einen beweglichen Stempels ausgegeben wird und/oder über die der Laminationsprozess gesteuert werden kann. Dies hat den Vorteil, dass der Laminationsprozess in eine globale Prozesssteuerung eingebunden, überwacht und geregelt werden kann. Eine solche Schnittstelle kann beispielsweise eine der in der Fertigungstechnik üblichen Schnittstellen Modbus, Profibus oder Ethernet sein. Sie kann aber auch anders ausgeführt sein.

Nachfolgend wird die Erfindung anhand bevorzugter Ausführungsbeispiele unter Bezugnahme auf die Figuren näher erläutert. Hierbei zeigen:
- Fig. 1a bis 1c: schematische Darstellungen einer Ausführungsform der Vorrichtung zum Laminieren eines mehrschichtigen Sicherheits-Dokumentenkörpers in verschiedenen Phasen des Laminationsprozesses;
- Fig. 2: eine schematische Darstellung des zeitlichen Verlaufs der Position eines beweglichen Stempels, des Abstandes zwischen den beiden Stempeln bzw. der Dicke des Substratschichtenstapels und der einzelnen Abschnitte während des Laminationsprozesses;
- Fig. 3a und 3b: schematische Darstellungen weiterer Ausführungsformen für die Anordnung des Abstandssensors;
- Fig. 4a und 4b: schematische Darstellungen weiterer Ausführungsformen für die Anordnung des Abstandssensors zur Erlangung einer erhöhten Ortsauflösung;
- Fig. 5: eine schematische Darstellung einer Ausführungsform der Vorrichtung bei Verwendung mehrerer thermischer Pressen zum Betrieb in einem mehrstufigen Kurztakt;
- Fig. 6: eine schematische Darstellung einer Ausführungsform der Vorrichtung bei Verwendung mehrerer thermischer Pressen zum Betrieb in einem einstufigen Kurztakt;
- Fig. 7: eine schematische Darstellung einer Ausführungsform der Vorrichtung bei einstufigem Betrieb und der Verwendung einer Kassette und
- Fig. 8: ein schematisches Ablaufdiagramm des Verfahrens zum Laminieren eines mehrschichtigen Sicherheits-Dokumentenkörpers.

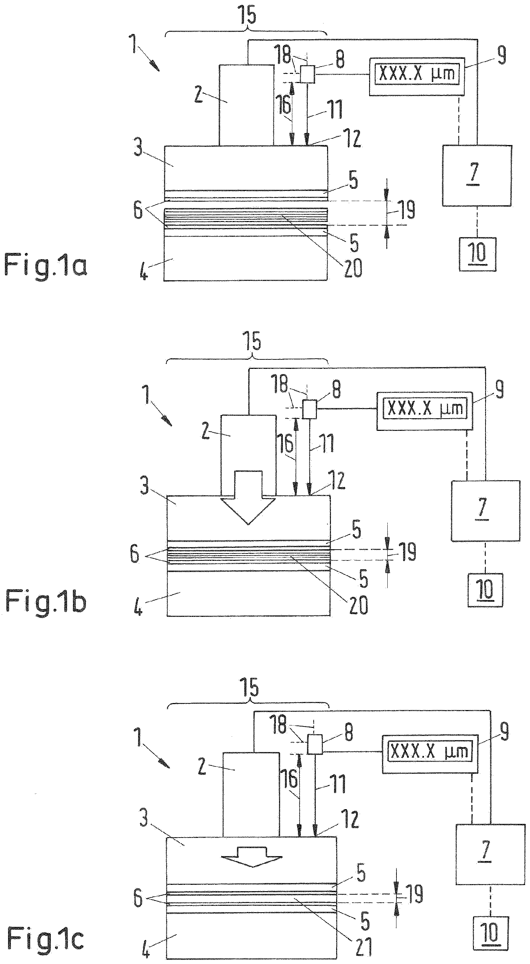

In Fig. 1a ist eine Ausführungsform der Vorrichtung 1 zum Laminieren eines mehrschichtigen Sicherheits-Dokumentenkörpers gezeigt. Die Vorrichtung 1 umfasst eine thermische Presse 15, welche beispielsweise einen beweglichen Stempel 3 und einen ortsfesten Stempel 4 umfasst. Der bewegliche Stempel 3 kann über einen Druckzylinder 2 bewegt werden. Zwischen die beiden Stempel 3, 4 sind Presspolster 5 angeordnet, welche für eine gleichmäßige Druckverteilung während des Pressvorgangs sorgen. An die Presspolster 5angrenzend werden Laminationsbleche 6 angeordnet, welche beim Pressvorgang die Grenzfläche zwischen den Stempeln 3, 4 und dem Substratschichtenstapel 20 bilden. Üblicherweise sind die Presspolster 5 dabei über die Stempel gezogen, können aber auch einfach mitsamt dem Substratschichtenstapel 20 eingelegt werden. Die Laminationsbleche 6 laufen im Kurztaktbetrieb unabhängig geführt durch die Stempel 3, 4.

An einer zu dem mindestens einen beweglichen Stempel 3 ortsfesten Fixposition 18 ist ein Abstandssensor 8 so angeordnet, dass ein Abstand 16 zwischen der ortsfesten Fixposition 18 des Abstandssensors 8 und dem beweglichen Stempel 3 fortlaufend bestimmt werden kann, woraus sich der Abstand 19 der beiden Stempel 3, 4 relativ zueinander bestimmen lässt.

Der bestimmte Abstand 16 wird als Signal ausgegeben und beispielsweise auf einer Anzeigeeinrichtung 9 fortlaufend angezeigt. Die Bestimmung des Abstands 16 kann beispielsweise über eine Laufzeitmessung eines Laserstrahls 11 erfolgen, wobei der Laserstrahl 11 an einem an dem beweglichen Stempel 3 angebrachten Reflexionselement 12 reflektiert und zum Abstandssensor 8 zurückgeschickt wird. Alternativ kann auf das Reflexionselement 12 verzichtet werden und eine diffuse Reflexion an einer Oberfläche des beweglichen Stempels 3 verwendet werden, sofern die diffuse Reflexion eine ausreichende Intensität aufweist.

Die Vorrichtung umfasst ferner eine Steuereinrichtung 7, welche den Anpressdruck der thermischen Presse 15 steuert. Optional wird das vom Abstandssensor 8 erzeugte Signal an die Steuereinrichtung 7 weitergeleitet, welche den gemessenen Abstand 16 auswertet und daraus fortlaufend die Dicke des Substratschichtenstapels 20 während des Laminationsprozesses bestimmt. Ebenfalls optional regelt die Steuereinrichtung 7 den Anpressdruck der thermischen Presse 16 in Abhängigkeit des bestimmten Abstands 16 bzw. der Dicke des Substratschichtstapels 20.

Die Figuren 1a, 1b und 1c zeigen die Vorrichtung 1 zu unterschiedlichen Zeitpunkten des Laminationsprozesses. Dabei bezeichnen gleiche Bezugszeichen gleiche Merkmale. Fig. 1a zeigt die Situation vor dem Laminieren. Der Substratschichtenstapel 20 befindet sich bereits zwischen den Laminationsblechen 6, hat jedoch noch keinen Kontakt zu diesen. Durch Anfahren der Ausgangsposition des beweglichen Stempels 3 werden die Laminationsbleche 6 in Kontakt mit dem Substratschichtenstapel 20 gebracht.

Diese Situation ist schematisch in Fig. 1b dargestellt. Sie stellt die Ausgangsstellung zur Bestimmung der Dicke des Substratschichtenstapels 20 dar, der an der Ausgangstellung bestimmte Abstand 16 wird also als Dicke des noch nicht laminierten Substratschichtenstapels 20 angenommen. Die Steuereinrichtung 7 erhöht nun über den Druckzylinder 2 den Anpressdruck des beweglichen Stempels 3 und setzt gleichzeitig die Temperatur im beweglichen 3 und ortsfesten 4 Stempel auf einen vorgegebenen und von den Materialien und Eigenschaften des Substratschichtenstapels 20 abhängigen Sollwert. Vorzugsweise werden der oder die Stempel vorgeheizt und unabhängig von den einzelnen Laminationsprozessen auf einer Solltemperatur gehalten.

Durch den erhöhten Anpressdruck und die erhöhte Temperatur fangen die Materialien im Substratschichtenstapel 20 an zu fließen und verbinden sich zu einem Laminat 21, was schematisch in Fig. 1c dargestellt ist. Während dieses Laminationsprozesses wird fortlaufend der Abstand 16 zwischen dem ortsfesten Abstandssensor 8 und dem beweglichen Stempel 3 bestimmt, woraus die Dicke des Substratschichtenstapels 20 bzw. des Laminats 21 über die Zeit bestimmt werden kann, beispielsweise durch die Steuervorrichtung 7. Erreicht nun die Dicke des Laminats 21 einen vorgegebenen Zielwert, so wird der Laminationsprozess beendet, beispielsweise indem die Steuereinrichtung 7 den beweglichen Stempel 3 durch Zurückfahren des Druckzylinders 2 wieder in die Ruheposition fährt. Zusätzlich kann die Temperatur nachgeregelt werden, wenn beispielsweise der vorgegebene Zielwert in einer Zeit erreicht wird, die kurzer oder länger als eine erwartete Zeit für das Erreichen dieses Zielwertes ist. Das Laminat 21 ist dann fertig und der Laminationsprozess abgeschlossen.

Alternativ kann der Laminationsvorgang nach einer vorgegebene Abstandsänderung abgebrochen werden oder abhängig von einer auftretenden Abstandänderungsgeschwindigkeit ausgeführt werden. Nimmt die Abstandsänderungsgeschwindigkeit zu, hat das Pressgut beispielsweise seine Glasübergangstemperatur erreicht, so dass die Lamination dann abgeschlossen ist und der Prozess beendet werden kann.

Optional können das am Abstandssensor 8 erzeugte Signal und/oder die Steuerdaten an einer Schnittstelle 10 ausgegeben werden. Ebenfalls denkbar ist eine Steuerung der Parameter des Laminationsprozesses über diese Schnittstelle 10.

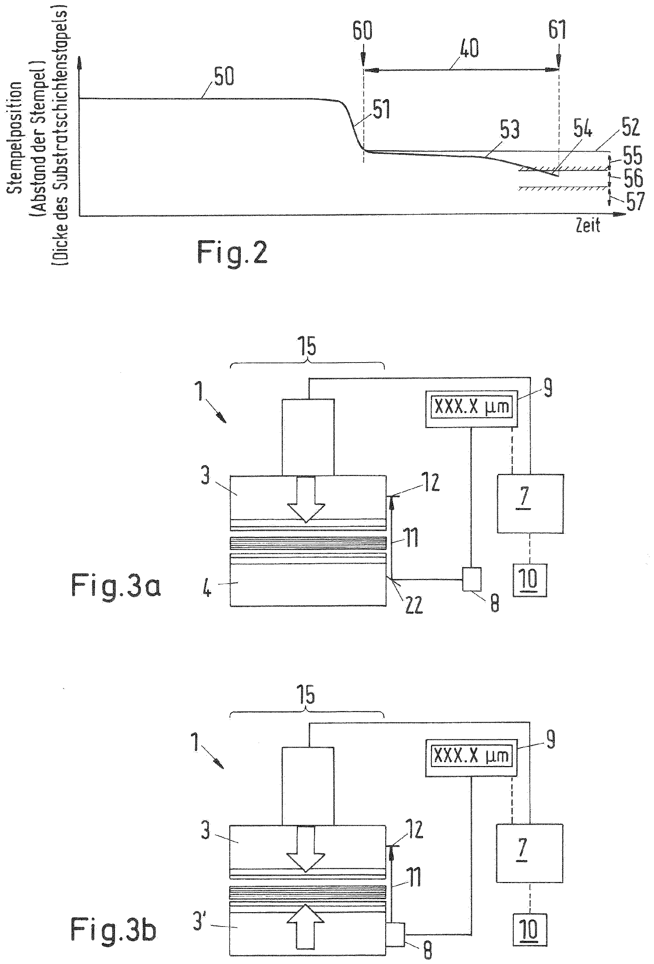

Fig. 2 zeigt schematisch eine Darstellung des zeitlichen Verlaufs der Stempelposition des mindestens einen beweglichen Stempels und der einzelnen Abschnitte vor und während des Laminationsprozesses 40. Zur Stempelposition äquivalent sind der Abstand des mindestens einen beweglichen Stempels relativ zu dem weiteren Stempel bzw. die daraus bestimmte Dicke des Substratschichtenstapels. Es wird fortlaufend der Abstand zwischen der ortsfesten Position des Abstandssensors und des mindestens einen beweglichen Stempels bestimmt. Vor dem Laminationsprozess 40 befindet sich der bewegliche Stempel in der Ruheposition 50.

Zu Beginn 60 des Laminationsprozesses 40 wird der bewegliche Stempel durch Verfahren des Druckzylinders geschlossen 51, so dass die Laminationsbleche sich in Kontakt mit dem Substratschichtenstapel befinden. Die Bestimmung des Kontaktes kann beispielsweise durch Differentiation der gemessenen Stempelposition nach der Zeit erfolgen, wobei der Kontakt anhand charakteristischer Merkmale in der Differentiationskurve identifiziert wird, beispielsweise nach Durchlaufen einer Signalspitze, welche beim Aufsetzen der Laminationsbleche auf die Oberfläche des Substratschichtenstapels entsteht und an der der Anpressdruck erhöht werden muss, damit es zu einer weiteren Verschiebung der Position des beweglichen Stempels kommt.

Nach dem Schließen des Druckzylinders 51 wird der Abstand zwischen dem ortsfesten Abstandssensor und dem beweglichen Stempel bestimmt. Die Position des ortsfesten Stempels ist bekannt oder wird vorher bestimmt, so dass aus dem bestimmten Abstand und der Position des ortsfesten Stempels ein Abstand des beweglichen Stempels relativ zum ortsfesten Stempel bestimmt werden kann. Dieser Abstand stellt dann den Ausgangswert 52 für die während des Laminationsprozesses 40 durchgeführten Messungen des Abstands der beiden Stempel zueinander bzw. der Dicke des Substratschichtenstapels dar. Nach Bestimmen dieses Ausgangswertes 52 beginnt 60 die Laminierung durch Erhöhung des Anpressdruckes.

Es beginnt nun die Deformationsphase 53, in der die einzelnen Schichten im Substratschichtenstapel anfangen zu fließen und sich miteinander zu verbinden, was zu einer Änderung der Dicke des Stapels führt. Während der Deformationsphase 53 wird fortlaufend der Abstand zwischen dem ortsfesten Abstandssensor und dem beweglichen Stempel und somit die Stempelposition bestimmt, so dass aus den aktuellen Werten und dem Ausgangswert 52 der aktuelle Abstand zwischen den beiden Stempeln bzw. die aktuelle Dicke des Substratschichtenstapels bestimmt werden kann.

Wird nach einiger Zeit ein Zielwert 54 innerhalb eines Zielbereichs 56 für einen vorgegebenen Abstand bzw. eine vorgegebene Dicke erreicht, so wird der Laminationsprozess 40 beendet 61. Dies geschieht durch Verringern des Anpressdrucks. Der Zielbereich 56 wird dabei so gewählt, dass er zwischen dem Delaminationsbereich 55 und dem Überdeformationsbreich 57 liegt.

Im Delaminationsbereich 55 ist die Laminierung noch nicht vollständig abgeschlossen und ein vorzeitiges Beenden des Laminationsprozesses 40 würde zu einem Sicherheits-Dokumentenkörper führen, der delaminierbar ist. Im Überdeformationsbereich 57 kann es hingegen bereits zu Schäden in den einzelnen Substratschichten gekommen sein, beispielsweise können empfindliche elektronische Bauelemente, wie filigrane mit leitender Druckfarbe gedruckte Antennenstrukturen, zerstört oder beschädigt worden sein. Um dies zu vermeiden, wird der Laminationsprozess 40 bei Erreichen des Zielwertes 54 beendet 61.

Durch fortlaufendes Bestimmen und Überwachen der Stempelposition und folglich des Abstands der Stempel zueinander bzw. der Dicke des Substratschichtenstapels kann die Qualität des fertigen Laminats erhöht und gesichert werden, so dass sich der Ausschuss verringert und die Lebensdauer des Sicherheits-Dokumentenkörpers erhöht.

Angemerkt wird, dass auch eine Abstandänderung oder eine Abstandsänderungsgeschwindigkeit oder sogar -beschleunigung als Überwachungsgröße verwendet werden können, insbesondere wenn die Materialstärken von Laminationsblechen oder Ähnlichem in verschiedenen Presszyklen variieren können

Fig. 3a zeigt eine schematische Darstellung einer Ausführungsform der Vorrichtung 1 mit einer alternativen Anordnung des Abstandssensors 8. Der Abstandssensor 8 ist ortsfest so positioniert, dass ein Laser einen Laserstrahl 11 auf einen an einem ortsfesten Stempel 4 befestigten Umlenkspiegel 22 aussendet und der Laserstrahl 11 von dem Umlenkspiegel 22 in einem 45°-Winkel parallel zur Richtung des Anpressdrucks umgelenkt wird. Anschließend trifft der Laserstrahl auf ein Reflexionselement 12, wird dort zurück reflektiert, trifft wieder auf den Umlenkspiegel 22 und wird in Richtung des Abstandssensors 8 umgelenkt. Im Abstandssensor 8 wird dann die Laufzeit oder die Phasenverschiebung ausgewertet, so dass die Stempelposition bestimmt werden kann. Die restliche Ausführung ist identisch mit der Ausführungsform und Beschreibungen der Figuren 1a bis 1c und 2, wobei gleiche Bezugszeichen gleiche Merkmale bezeichnen.

In Fig. 3b ist schematisch eine Ausführungsform der Vorrichtung 1 gezeigt, bei der beide Stempel der thermischen Presse 15 während des Laminationsprozesses bewegt werden. Um in diesem Fall eine Messung des Abstands der beiden beweglichen Stempel 3, 3' relativ zueinander machen zu können, ist der Abstandssensor 8 an einem der beiden Stempel, hier beispielsweise dem unteren 3' beweglichen Stempel, angebracht, so dass er sich mit dem unteren 3' beweglichen Stempel mitbewegt. Von dem Abstandssensor 8 sendet ein Laser einen Laserstrahl 11 aus, der an einem Reflexionselement 12, welches an dem anderen beweglichen Stempel 3 angebracht ist reflektiert wird und anschließend von dem Abstandssensor 8 detektiert wird. Der Abstandssensor bestimmt die Laufzeit und/oder die Phasenbeziehung des ausgesandten und reflektierten Laserstrahls 11 und bestimmt darüber den Abstand der beiden beweglichen Stempel 3, 3' relativ zueinander, woraus sich die Dicke des Substratschichtenstapels 20 bzw. des Laminats bestimmen lässt. Die restliche Ausführung ist identisch mit der Ausführungsform und Beschreibungen der Figuren 1a bis 1c und 2, wobei gleiche Bezugszeichen gleiche Merkmale bezeichnen.

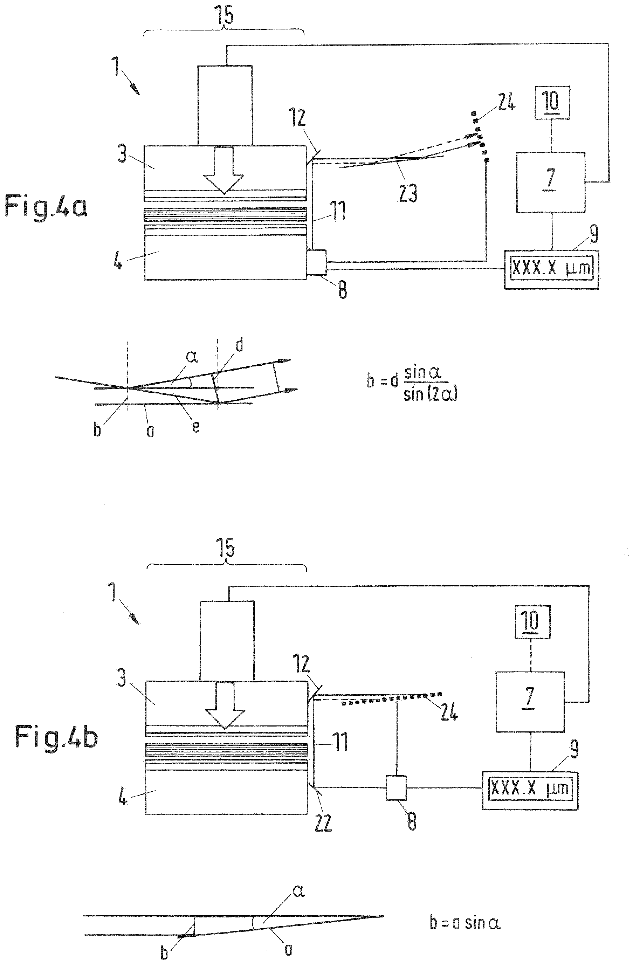

In Fig. 4a ist eine schematische Darstellung einer Ausführungsform der Vorrichtung 1 gezeigt, bei der die Auflösung bei der Bestimmung des Abstandes zwischen dem mindestens einen beweglichen Stempel 3 und dem ortsfesten Stempel 4 der thermischen Presse 15 erhöht wird. Dazu wird ein ortsfester in einem zum Horizont spitzen Winkel geneigter Spiegel 23 neben die thermische Presse 15 positioniert, so dass der Laserstrahl 11 den Spiegel während des gesamten Laminationsprozesses trifft. Durch die Neigung des Spiegels um den Winkel α kann die Messung des Abstands zwischen den beiden Stempels, hier mit b bezeichnet, über die Bestimmung eines weiteren Abstandes, hier mit d bezeichnet, bestimmt werden, wobei der Abstand d immer größer ist als b. Die Umrechnung erfolgt nach der in Fig. 4a gezeigten Beziehung. Auf diese Weise kann eine wesentlich höhere Auflösung bei der Messung des Abstands erreicht werden. Die Messung selber kann beispielsweise über einen Charged-Coupled-Devices(CCD)-Zeilendetektor 24 erfolgen, der mit dem Abstandssensor 8 verbunden ist. Die restliche Ausführung ist identisch mit der Ausführungsform und Beschreibungen der Figuren 1a bis 1c und 2, wobei gleiche Bezugszeichen gleiche Merkmale bezeichnen.

In Fig. 4b ist eine weitere Ausführungsform der Vorrichtung 1 mit erhöhter Auflösung gezeigt. Die Ausführungsform ist ähnlich der in Fig. 4a gezeigten Ausführungsform, jedoch trifft der Laserstrahl 11 direkt auf einen in einem zum Horizont spitzen Winkel geneigten CCD-Zeilendetektor. Wie in Fig. 4b gezeigt, wird an dem CCD-Zeilendetektor 24 der Abstand a bestimmt, welcher dann mit Hilfe des Auftreffwinkels α in den Abstand der beiden Stempel, hier mit b bezeichnet, umgerechnet werden kann. Dadurch wird die Auflösung bei der Bestimmung des Abstands des beweglichen Stempels 3 relativ zum ortsfesten Stempel 4 nochmals erhöht. Die restliche Ausführung ist identisch mit der Ausführungsform und Beschreibungen der Figuren 1a bis 1c und 2, wobei gleiche Bezugszeichen gleiche Merkmale bezeichnen.

Alternativ kann ein Laserstrahl auf eine quer, vorzugsweise senkrecht, zur Bewegungsrichtung stehende Oberfläche des beweglichen Stempels unter einem Winkel, vorzugsweise einem Winkel größer 25°, noch bevorzugter großer 30°, bezogen auf eine Oberflächennormale der Oberfläche gerichtet werden und ein von der Oberfläche zurückgestreuter oder reflektierter Strahl mittels eines CCD-Zeilendetektors detektiert werden. Durch die Bewegung des beweglichen Stempels entlang der Bewegungsrichtung verschiebt sich auch die Position des zurückgestreuten oder reflektierten Laserstrahls auf dem CCD-Zeilendetektor, so dass daraus von einer Steuereinrichtung die Stempelposition berechnet werden kann. Eine Oberfläche des Stempels ist auch jede Oberfläche eines mit dem Stempel starr verbundenen Objekts. Ändert sich die Position des Stempels, ändert sich der Auftreffort des Laserstrahls auf der Oberfläche und somit der Ort der in der Regel diffusen Streuung (oder Reflexion bei spiegelnden Oberflächen). Die Position des Auftrefforts ist somit mit der Stempelposition korreliert.

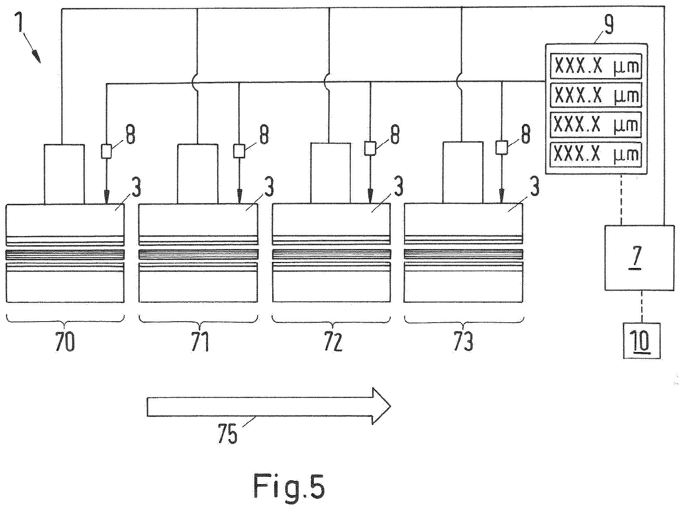

In Fig. 5 ist eine schematische Darstellung einer Ausführungsform der Vorrichtung 1 bei Verwendung mehrerer thermischer Pressen zum Betrieb in einem mehrstufigen Kurztakt dargestellt. Die Vorrichtung 1 umfasst insgesamt vier hintereinander in Prozessrichtung 75 angeordnete thermische Pressen: zwei Heizpressen 70, 71 und zwei Kühlpressen 72, 73. Ein Substratschichtstapel durchläuft nacheinander im Prozesstakt beide Heizpressen 70, 71 und beide Kühlpressen 72, 73. An jede der Pressen 70, 71, 72, 73 ist ein eigener Abstandssensor 8 angeordnet, welcher jeweils den Abstand zwischen der jeweiligen ortsfesten Fixposition der Abstandssensoren 8 und der jeweiligen beweglichen Stempel 3 und daraus die jeweilige Stempelposition bestimmt. Die bestimmten Abstände bzw. Stempelpositionen werden als Signal ausgegeben und beispielsweise auf einer Anzeigeeinrichtung 9 dargestellt. Optional werden die Abstände bzw. die Stempelpositionen an eine Steuereinrichtung 7 weitergeleitet, welche die Pressen 70, 71, 72, 73 steuert oder regelt. Diese Steuereinrichtung 7 hat optional eine Schnittstelle 10, über die Daten ausgegeben werden können oder Daten für die Prozesssteuerung oder -regelung empfangen werden können. Dadurch, dass bei jeder einzelnen Presse 70, 71, 72, 73 der Abstand bzw. die Stempelposition und darüber die Dicke des jeweiligen Substratschichtenstapels bestimmt werden kann, kann beim Laminieren jeder einzelne Prozessschritt überwacht, gesteuert oder geregelt werden. Dadurch erhöht sich auch in einem mehrstufigen Laminationsprozess die Qualität des fertigen Laminats.

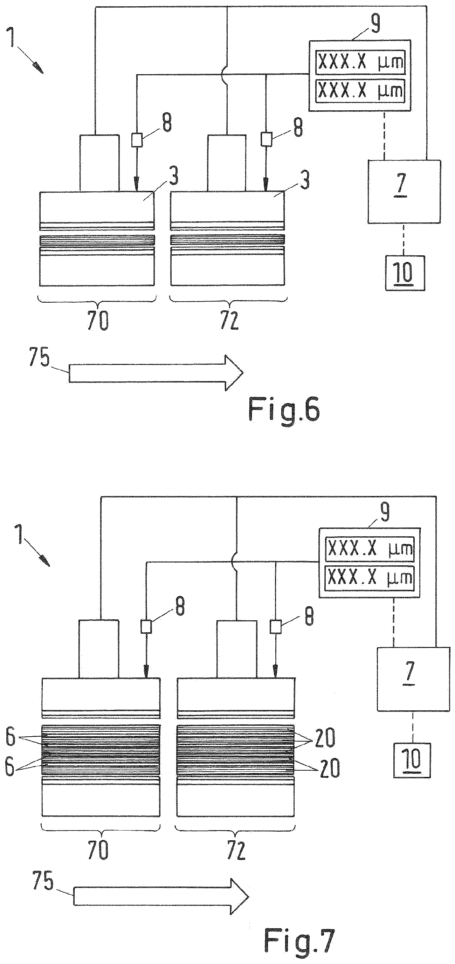

Fig. 6 zeigt eine schematische Darstellung einer Ausführungsform der Vorrichtung 1 bei Verwendung mehrerer thermischer Pressen zum Betrieb in einem einstufigen Kurztakt, wobei im Gegensatz zu der in Fig. 5 gezeigten Vorrichtung nur eine Heizpresse 70 und eine Kühlpresse 72, welche von einem Substratschichtenstapel in Prozessrichtung 75 nacheinander durchlaufen werden, verwendet werden. Jede der beiden Pressen 70, 72 hat einen eigenen Abstandssensor 8, der ein dem Abstand entsprechendes Signal erzeugt, das beispielsweise auf einer Anzeigeeinrichtung 9 dargestellt wird. Die sonstige Ausführung ist analog zu den in Fig. 1a bis 1c sowie Fig. 3a und 3b dargestellten und erläuterten Ausführungsformen mit den entsprechenden Bezugszeichen.

Fig. 7 zeigt eine schematische Darstellung einer Ausführungsform der Vorrichtung 1 beim einstufigen Betrieb und der Verwendung einer Kassette 17, in der sich mehrere Substratschichtenstapel 20 übereinander befinden, welche jeweils durch Laminationsbleche 6 voneinander getrennt sind und in jedem Prozessschritt gleichzeitig verarbeitet werden. Die Kassette 17 durchläuft nacheinander in Prozessrichtung 75 eine Heizpresse 70 und eine Kühlpresse 72. Jede der beiden Pressen 70, 72 besitzt jeweils einen eigenen Abstandssensor 8. Bis auf die Verwendung einer Kassette 17 ist die Ausführung analog der in den Figuren 1a bis 1c, 5 und 6 geschilderten Ausführungsformen, wobei die Bezugszeichen identisch sind.

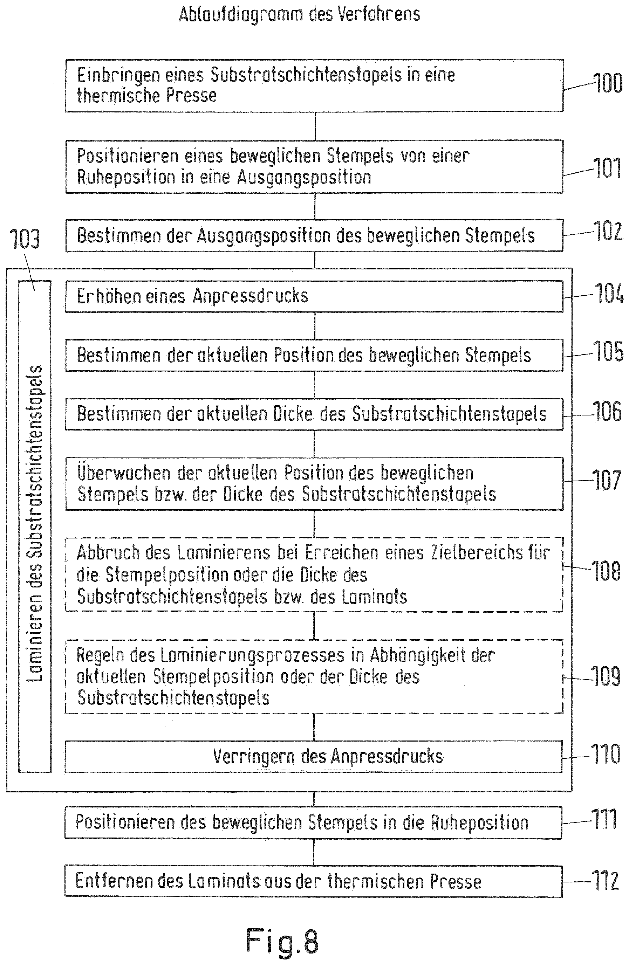

Fig. 8 zeigt ein schematisches Ablaufdiagramm eines Verfahrens zum Laminieren von mehrschichtigen Sicherheits-Dokumentenkörpern. Im ersten Schritt wird der Substratschichtenstapel des mehrschichtigen Sicherheits-Dokumentenkörpers in eine thermische Presse eingebracht 100. Anschließend wird der bewegliche Stempel der thermischen Presse von einer Ruheposition in eine Ausgangsposition gebracht 101. In der Ausgangsposition wird dann durch den ortsfesten Abstandssensor der Abstand zwischen dem ortsfesten Abstandssensor und dem beweglichen Stempel ermittelt und daraus die Ausgangsposition des beweglichen Stempels ermittelt 102. Nach Bestimmen der Ausgangsposition beginnt das Laminieren des Substratschichtenstapels 103. Während des Laminierens 103 wird in einem ersten Schritt der Anpressdruck erhöht 104. Dabei wird fortlaufend die aktuelle Position des beweglichen Stempels von dem Abstandsensor bestimmt 105. Aus der aktuellen Position wird durch Vergleich mit der Ausgangsposition fortlaufend die aktuelle Dicke des Substratschichtenstapels bestimmt 106. Die aktuelle Position des beweglichen Stempels und die Dicke des Substratschichtenstapels werden laufend überwacht 107. Optional wird das Laminieren bei Erreichen eines Zielbereichs für die Position des beweglichen Stempels oder die Dicke des Substratschichtenstapels bzw. des Laminats abgebrochen 108. Ebenfalls optional kann der gesamte Laminationsprozess in Abhängigkeit der aktuellen Position des beweglichen Stempels oder der aktuellen Dicke des Substratschichtenstapels oder Laminats geregelt werden 109. Alternativ oder zusätzlich kann oder können eine Abstandsänderung der Stempel oder eine Dickenänderung des Laminats und/oder eine Abstandsänderungsgeschwindigkeit und oder Abstandsänderungsbeschleunigung als Regelgröße oder Regelgrößen genutzt werden. Am Ende des Laminierens wird der Anpressdruck wieder verringert 110. Nach Beenden des Laminierens wird der bewegliche Stempel wieder in seine Ruheposition gefahren 110 und das fertige Laminat wird aus der thermischen Presse entfernt 111.

### Bezugszeichenliste

- 1: Vorrichtung
- 2: Druckzylinder
- 3: beweglicher Stempel
- 4: ortsfester Stempel
- 5: Presspolster
- 6: Laminationsbleche
- 7: Steuereinrichtung
- 8: Abstandssensor
- 9: Anzeigeeinrichtung
- 10: Schnittstelle
- 11: Laserstrahl
- 12: Reflexionselement
- 15: thermische Presse
- 16: Abstand
- 17: Kassette
- 18: Fixposition
- 19: Abstand der beiden Stempel relativ zueinander
- 20: Substratschichtenstapel
- 21: Laminat
- 22: Umlenkspiegel
- 24: CCD-Zeilendetektor
- 40: Laminationsprozess
- 50: Ruheposition
- 51: Schließen des Druckzylinders
- 52: Ausgangswert für die Dickemessung
- 53: Deformationsphase
- 54: Zielwert
- 55: Delaminationsbereich
- 56: Zielbereich
- 57: Überdeformationsbereich
- 60: Beginn des Laminationsprozesses
- 61: Ende des Laminationsprozesses
- 70: Heizpresse 1
- 71: Heizpresse 2
- 72: Kühlpresse 1
- 73: Kühlpresse 2
- 75: Prozessrichtung
- 100-112: Verfahrensschritte

## Patentansprüche

1. Vorrichtung (1) zum Laminieren eines aus mehreren Substratschichten bestehenden Substratschichtenstapels (20) zu einem Sicherheits-Dokumentenkörper, umfassend
mindestens eine thermische Presse (15) mit mindestens einem beweglichen Stempel (3) zum Laminieren des aus mehreren Substratschichten bestehenden Substratschichtenstapels (20) und
eine Steuereinrichtung (7) zum Steuern eines Anpressdrucks der thermischen Presse (15),
**gekennzeichnet durch**
mindestens einen Abstandssensor (8) zum Messen mindestens eines Abstandes des mindestens einen beweglichen Stempels (3) relativ zu einem weiteren Stempel, wobei der mindestens eine Abstandssensor (8) ein dem Abstand entsprechendes Signal erzeugt.

2. Vorrichtung (1) nach Anspruch 1, **dadurch gekennzeichnet,**
**dass** die Steuereinrichtung (7) das Signal vom Abstandssensor (8) als Eingangsparameter zum Regeln des Anpressdrucks des mindestens einen beweglichen Stempels (3) verwendet.

3. Vorrichtung (1) nach Anspruch 1 oder 2, **dadurch gekennzeichnet,**
**dass** der mindestens eine Abstandssensor (8) einen Laser umfasst.

4. Vorrichtung (1) nach einem der Ansprüche 1 bis 3, **dadurch gekennzeichnet, dass** der mindestens eine Abstandssensor (8) so ausgebildet ist, den Abstand des mindestens einen beweglichen Stempels (3) relativ zu dem weiteren Stempel interferometrisch zu bestimmen.

5. Vorrichtung (1) nach einem der Ansprüche 1 bis 4, **dadurch gekennzeichnet, dass** die Vorrichtung mehrere Pressen (70, 71, 72, 73) umfasst, wobei jede Presse (70, 71, 72, 73) mindestens einen eigenen Abstandssensor (8) umfasst.

6. Vorrichtung (1) nach einem der Ansprüche 1 bis 5, **dadurch gekennzeichnet, dass** die Steuereinrichtung (7) ausgebildet ist, den Pressvorgang zu beenden, sobald ein vorgegebener Zielbereich (56) für den Abstand erreicht ist.

7. Vorrichtung (1) nach einem der Ansprüche 1 bis 6, **dadurch gekennzeichnet, dass** die mindestens eine Presse (15, 70, 71, 72, 73) Heiz- und/oder Kühlvorrichtungen umfasst.

8. Vorrichtung nach einem der Ansprüche 1 bis 7, **dadurch gekennzeichnet, dass** die mindestens eine Presse (15, 70, 71, 72, 73) Presspolster (5) umfasst.

9. Vorrichtung (1) nach einem der Ansprüche 1 bis 8, **dadurch gekennzeichnet, dass** die Presse (15, 70, 71, 72, 73) eine Kassette (17) umfasst, in der mehrere Substratschichtenstapel (20) bestehend jeweils aus mehreren Substratschichten gleichzeitig in einem einzigen Pressvorgang laminiert werden.

10. Vorrichtung (1) nach einem der Ansprüche 1 bis 9, **dadurch gekennzeichnet, dass** neben dem Abstand eine Temperatur der Heiz- und/oder Kühlplatten erfasst wird.

11. Vorrichtung (1) nach einem der Ansprüche 1 bis 10, **dadurch gekennzeichnet, dass** die Steuereinrichtung (7) ausgebildet ist, die Temperatur der Heiz- und/oder Kühlplatten zu regeln, wobei der Abstand Eingangsparameter für die Regelung ist.

12. Verfahren zum Laminieren eines mehrschichtigen Sicherheits-Dokumentenkörpers, die folgenden Schritte umfassend:
Einbringen eines Substratschichtenstapels (20) aus mehreren Substratschichten in eine thermische Presse (100) mit mindestens einem beweglichen Stempel,
Laminieren der Substratschichten zu einem Sicherheits-Dokumentenkörper durch einen Pressvorgang (103),
**dadurch gekennzeichnet,**
**dass** während des Pressvorgangs mindestens ein Abstand des mindestens einen beweglichen Stempels relativ zu einem weiteren Stempel bestimmt und als entsprechendes Signal ausgegeben wird (105).

13. Verfahren nach Anspruch 12, **dadurch gekennzeichnet,**
**dass** das Signal als Parameter zum Regeln des Anpressdrucks verwendet wird.

14. Verfahren nach einem der Ansprüche 12 oder 13, **dadurch gekennzeichnet, dass** der Abstand gemessen wird, indem ein Laserstrahl auf eine quer, vorzugsweise senkrecht, zur Bewegungsrichtung stehende Oberfläche des beweglichen Stempels (3) unter einem Winkel, vorzugsweise einem Winkel größer 25°, noch bevorzugter großer 30°, bezogen auf eine Oberflächennormale der Oberfläche gerichtet wird und ein von der Oberfläche zurückgestreuter oder reflektierter Strahl mittels eines CCD-Zeilendetektors detektiert wird.

## Claims

1. A device (1) for laminating a layered substrate stack (20) consisting of a plurality of substrate layers to form a security document body, comprising
at least one heat press (15) having at least one movable ram (3) for laminating the layered substrate stack (20) consisting of a plurality of substrate layers, and
a control unit (7) for controlling a contact pressure of the heat press (15),
**characterised by**
at least one distance sensor (8) for measuring at least a distance of the at least one movable ram (3) relative to a further ram, wherein the at least one distance sensor (8) generates a signal corresponding to the distance.

2. The device (1) according to claim 1, **characterised in that** the control unit (7) uses the signal from the distance sensor (8) as an input parameter for controlling the contact pressure of the at least one movable ram (3).

3. The device (1) according to claim 1 or 2, **characterised in that** the at least one distance sensor (8) comprises a laser.

4. The device (1) according to any one of claims 1 to 3, **characterised in that** the at least one distance sensor (8) is designed so that the distance of the at least one movable ram (3) relative to the further ram is determined by means of interferometry.

5. The device (1) according to any one of claims 1 to 4, **characterised in that** the device comprises a plurality of presses (70, 71, 72, 73), wherein each press (70, 71, 72, 73) comprises at least one dedicated distance sensor (8).

6. The device (1) according to any one of claims 1 to 5, **characterised in that** the control device (7) is designed to end the press operation as soon as a predefined target region (56) for the distance is reached.

7. The device (1) according to any one of claims 1 to 6, **characterised in that** the at least one press (15, 70, 71, 72, 73) comprises heating and/or cooling devices.

8. The device according to any one of claims 1 to 7, **characterised in that** the at least one press (15, 70, 71, 72, 73) comprises press pads (5).

9. The device (1) according to any one of claims 1 to 8, **characterised in that** the press (15, 70, 71, 72, 73) comprises a cassette (17), in which a plurality of layered substrate stacks (20) each consisting of a plurality of substrate layers are laminated simultaneously in a single press operation.

10. The device (1) according to any one of claims 1 to 9, **characterised in that**, besides the distance, the temperature of the heating and/or cooling plates is detected.

11. The device (1) according to any one of claims 1 to 10, **characterised in that** the control device (7) is configured to control the temperature of the heating and/or cooling plates, wherein the distance is an input parameter for the control.

12. A method for laminating a multi-layered security document body, comprising the following steps:
introducing a layered substrate stack (20) formed of a plurality of substrate layers into a thermal press (100) comprising at least one movable ram, and laminating the substrate layers to form a security document body as a result of the press operation (103),
**characterised in that**
during the press operation, at least a distance of the at least one movable ram relative to a further ram is determined and is output (105) in the form of a corresponding signal.

13. The method according to claim 12, **characterised in that** the signal is used as a parameter for controlling the contact pressure.

14. The method according to any one of claims 12 or 13, **characterised in that** the distance is measured by directing a laser beam onto a surface of the movable ram (3) disposed transversely, preferably perpendicularly, to the direction of movement, at an angle, preferably an angle greater than 25°, even more preferably greater than 30°, in relation to a surface normal of the surface, and detecting a beam scattered back or reflected from the surface by means of a CCD array detector.

## Revendications

1. Dispositif (1) servant à laminer un empilement de couches de substrat (20) constitué de plusieurs couches de substrat pour former un corps de document de sécurité, comprenant
au moins une presse (15) thermique pourvue d'au moins un poinçon (3) mobile servant à laminer l'empilement de couches de substrat (20) constitué de plusieurs couches de substrat, et
un système de commande (7) servant à commander une pression de compression de la presse (15) thermique, **caractérisé par**
au moins un capteur de distance (8) servant à mesurer au moins une distance entre l'au moins un poinçon (3) mobile et un autre poinçon, dans lequel l'au moins un capteur de distance (8) génère un signal correspondant à la distance.

2. Dispositif (1) selon la revendication 1, **caractérisé en ce**
**que** le système de commande (7) utilise le signal du capteur de distance (8) en tant que paramètre d'entrée servant à réguler la pression de compression de l'au moins un poinçon (3) mobile.

3. Dispositif (1) selon la revendication 1 ou 2, **caractérisé en ce que** l'au moins un capteur de distance (8) comprend un laser.

4. Dispositif (1) selon l'une quelconque des revendications 1 à 3, **caractérisé en ce que** l'au moins un capteur de distance (8) est réalisé de manière à déterminer de manière interférométrique la distance entre l'au moins un poinçon (3) mobile et l'autre poinçon.

5. Dispositif (1) selon l'une quelconque des revendications 1 à 4, **caractérisé en ce que** le dispositif comprend plusieurs presses (70, 71, 72, 73), dans lequel chaque presse (70, 71, 72, 73) comprend au moins un propre capteur de distance (8).

6. Dispositif (1) selon l'une quelconque des revendications 1 à 5, **caractérisé en ce que** le dispositif de commande (7) est réalisé afin de mettre un terme à l'opération de pressage dès qu'une zone cible (56) prédéfinie pour la distance est atteinte.

7. Dispositif (1) selon l'une quelconque des revendications 1 à 6, **caractérisé en ce que** l'au moins une presse (15, 70, 71, 72, 73) comprend des dispositifs de chauffage et/ou de refroidissement.

8. Dispositif selon l'une quelconque des revendications 1 à 7, **caractérisé en ce que** l'au moins une presse (15, 70, 71, 72, 73) comprend un coussinet pour presse (5).

9. Dispositif (1) selon l'une quelconque des revendications 1 à 8, **caractérisé en ce que** la presse (15, 70, 71, 72, 73) comprend une cassette (17), dans laquelle plusieurs empilements de couches de substrat (20) constitués respectivement de plusieurs couches de substrat sont laminés de manière simultanée lors d'une unique opération de pressage.

10. Dispositif (1) selon l'une quelconque des revendications 1 à 9, **caractérisé en ce qu'**outre la distance, une température des plaques de chauffage et/ou de refroidissement est détectée.

11. Dispositif (1) selon l'une quelconque des revendications 1 à 10, **caractérisé en ce que** le système de commande (7) est réalisé afin de réguler la température des plaques de chauffage et/ou de refroidissement, dans lequel la distance est un paramètre d'entrée pour la régulation.

12. Procédé servant à laminer un corps de document de sécurité multicouche, qui comprend les étapes qui suivent consistant à :
introduire un empilement de couches de substrat (20) composé de plusieurs couches de substrat dans une presse (100) thermique pourvue d'au moins un poinçon mobile, laminer les couches de substrat pour former un corps de document de sécurité par une opération de pressage (103),
**caractérisé en ce**
**qu'**au cours de l'opération de pressage, au moins une distance entre l'au moins un poinçon mobile et un autre poinçon est déterminée et est livrée (105) sous la forme d'un signal correspondant.

13. Procédé selon la revendication 12, **caractérisé en ce que** le signal est utilisé en tant que paramètre servant à réguler la pression de compression.

14. Procédé selon l'une quelconque des revendications 12 ou 13, **caractérisé en ce que** la distance est mesurée **en ce qu'**un rayon laser est dirigé sur une surface, se trouvant de manière transversale, de préférence de manière perpendiculaire, par rapport à la direction de déplacement du poinçon (3) mobile selon un angle, de préférence un angle supérieur à 25°, de manière plus préférée supérieur à 30° par rapport à une normale de surface de la surface, et un rayon renvoyé ou réfléchi par la surface est détecté au moyen d'un détecteur de lignes CCD.
